(19)

Europäisches Patentamt

European Patent Office

Office européen des brevets

(11) **EP 4 174 761 A1**

(12) **EUROPEAN PATENT APPLICATION**

published in accordance with Art. 153(4) EPC

(43) Date of publication:
03.05.2023 Bulletin 2023/18

(21) Application number: 20943461.2

(22) Date of filing: 20.08.2020

(51) International Patent Classification (IPC):
*G06T 7/00* (2017.01)  *G06T 7/136* (2017.01)
*G06T 7/187* (2017.01)  *G06T 7/66* (2017.01)
*G06T 5/40* (2006.01)

(86) International application number:
**PCT/CN2020/110230**

(87) International publication number:
**WO 2022/000733 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.06.2020 CN 202010602488

(71) Applicant: **Suzhou Rainmed Medical Technology
Co., Ltd.
Suzhou, Jiangsu 215000 (CN)**

(72) Inventors:
• WANG, Zhiyuan
 **Suzhou, Jiangsu 215000 (CN)**
• FENG, Liang
 **Suzhou, Jiangsu 215000 (CN)**
• LIU, Guangzhi
 **Suzhou, Jiangsu 215000 (CN)**
• CHEN, Yundai
 **Suzhou, Jiangsu 215000 (CN)**

(74) Representative: **Boult Wade Tennant LLP
Salisbury Square House
8 Salisbury Square
London EC4Y 8AP (GB)**

(54) **METHOD AND SYSTEM FOR OBTAINING CENTERLINE OF AORTA ON BASIS OF CT
SEQUENCE IMAGES**

(57) The present application provides a method and system for acquiring centerline of aorta based on CT sequence images. The method comprises: acquiring three-dimensional data of CT sequence images; acquiring a gravity center of heart and a gravity center of spine based on the three-dimensional data; filtering impurity data from the three-dimensional data of CT sequence images to obtain an image containing left atrium, left ventricle and without interfering coronary artery tree; layered slicing to obtain a group of binarized images; obtaining a circle center and an radius from each layer of slice in the group of binarized images, to generate a point list and an radius list; and mapping one or more pixel points in the point list and the radius list to the image to obtain a centerline of aorta. In the present application, by first screening out the gravity center of heart and the gravity center of spine, locating the position of the heart and the spine, then removing the lung tissue, descending aorta, spine, and ribs from the CT images based on the position of the heart and spine, and extracting the centerline of aorta for the processed images, computation burden is reduced, with simple algorithms, easy operation, fast computing speed, scientific design and accurate image processing.

FIG.1

## Description

## TECHNICAL FIELD

The present invention refers to the technical field of coronary medicine, and in particular to methods and systems for acquiring centerline of aorta based on CT sequence images.

## BACKGROUND

Cardiovascular diseases are leading causes of death in the industrialized world. The major forms of cardiovascular diseases are caused by chronic accumulation of fatty material in the inner tissue layers of the arteries supplying the heart, brain, kidneys and lower extremities. Progressive coronary artery diseases restrict blood flow to the heart. Due to the lack of accurate information provided through current non-invasive tests, invasive catheterization procedures are required by many patients to evaluate coronary blood flow. Thus, a need exists for non-invasive methods for quantifying blood flow in human coronary arteries to evaluate the functional significance of possible coronary artery diseases. Reliable evaluation of arterial volume will therefore be important for disposition planning to address patient needs. Recent studies have demonstrated that hemodynamic characteristics, such as flow reserve fraction (FFR), are important indicators for determining the optimal disposition for patients with arterial disease. Routine evaluation of FFR uses invasive catheterization to directly measure blood flow characteristics, such as pressure and flow rate. However, these invasive measurement techniques carry risks to the patient and can result in significant costs to the health care system.

Computed tomography arteriography is a computed tomography technique used to visualize the arterial blood vessels. For this purpose, a beam of X-rays is passed from an radiation source through the area of interest in the patient's body to obtain a projection image.

Since the CT data in the prior art is not filtered, it leads to a large amount of calculations and has the problems of slow and inaccurate calculations.

## SUMMARY

The present application provides a method and system for acquiring centerline of aorta based on CT sequence images, to solve the problem of how to accurately extract the centerline of blood vessels.

To achieve the above, in a first aspect, the present application provides a method for acquiring centerline of aorta based on CT sequence images, comprising:

acquiring three-dimensional data of CT sequence images;

acquiring a gravity center of heart and a gravity center of spine based on the three-dimensional data;

filtering impurity data from the three-dimensional data of CT sequence images, to obtain an image containing left atrium, left ventricle and without interfering coronary artery tree;

layered slicing the image containing left atrium, left ventricle and without interfering coronary artery tree, to obtain a group of binarized images;

obtaining a circle center and an radius corresponding to the circle from each layer of slice in the group of binarized images, to generate a point list and an radius list;

mapping one or more pixel points located in the point list and the radius list within each layer of slice to the image containing left atrium, left ventricle and without interfering coronary artery tree, and obtaining a centerline of aorta.

Optionally, in the above method for acquiring centerline of aorta based on CT sequence images, the manner for acquiring a gravity center of heart based on the three-dimensional data comprises:

plotting a grayscale histogram of the CT images;

along a direction of the end point M to the original point O of the grayscale histogram, acquiring a volume of each grayscale value region from point M to point M-1, from point M to point M-2, until from point M to point O;

acquiring a volume ratio $V$ of the volume of each grayscale value region to a volume of the total region from point M to point O;

if $V = b$, picking a start point corresponding to the grayscale value region, projecting the start point onto the CT three-dimensional image, acquiring a three-dimensional image of a heart region, and picking a physical gravity center of the three-dimensional image of the heart region, which is the gravity center of the heart $P_2$;

wherein b denotes a constant, $0.2 < b < 1$.

Optionally, in the above method for acquiring centerline of aorta based on CT sequence images, the manner for acquiring a gravity center of spine based on the three-dimensional data comprises:

if $V = a$, picking a start point corresponding to the grayscale value region, projecting the start point onto the CT three-dimensional image, acquiring a three-dimensional image of a bone region, and picking a physical gravity center of the three-dimensional image of the bone region, which is the gravity center of the spine $P_1$;

wherein a denotes a constant, 0 < a < 0.2.

Optionally, in the above method for acquiring centerline of aorta based on CT sequence images, the manner for filtering impurity data from the three-dimensional data of CT sequence images comprises: removing lung tissue, descending aorta, spine, and ribs from the CT three-dimensional image to obtain a fifth image containing left atrium, left ventricle and without interfering coronary artery tree.

Optionally, in the above method for acquiring centerline of aorta based on CT sequence images, the manner for removing lung tissue based on the CT three-dimensional image comprises:

setting a lung grayscale threshold $Q_{lung}$ based on medical knowledge and CT imaging principle;

if a grayscale value in the grayscale histogram is less than $Q_{lung}$, removing an image corresponding to the grayscale value to obtain a first image with the lung tissue removed.

Optionally, in the above method for acquiring centerline of aorta based on CT sequence images, the manner for removing descending aorta based on the CT three-dimensional image comprises:

projecting the gravity center of heart $P_2$ onto the first image to obtain a circle center of the heart $O_1$;

setting a grayscale threshold for the descending aorta $Q_{descending}$, and binarizing the first image;

acquiring a circle corresponding to the descending aorta based on a distance from the descending aorta to the circle center of the heart $O_1$ and a distance from the spine to the circle center of the heart $O_1$;

removing the descending aorta from the first image to obtain a second image.

Optionally, in the above method for acquiring centerline of aorta based on CT sequence images, the manner for setting a grayscale threshold for the descending aorta $Q_{descending}$, and binarizing the first image comprises:

acquiring one or more pixel points PO within the first image with a grayscale value greater than the grayscale threshold for the descending aorta $Q_{descending}$, and calculating an average grayscale value $\overline{Q}_1$ of the one or more pixel points PO;

layered slicing the first image starting from its bottom layer to obtain a first group of two-dimensional sliced images;

based on

$$\begin{cases} Q_k < Q_{descending}, & P(k) = 0 \\ Q_{descending} \leq Q_k \leq 2\overline{Q}_1, & P(k) = 1 \\ Q_k > 2\overline{Q}_1, & P(k) = 0 \end{cases}$$

, binarizing the first image, removing impurity points in the first image to obtain a binarized image, wherein k is a positive integer, $Q_k$ denotes the grayscale value corresponding to the k-th pixel point PO, and P(k) denotes the pixel value corresponding to the k-th pixel point PO.

Optionally, in the above method for acquiring centerline of aorta based on CT sequence images, the manner for acquiring a circle corresponding to the descending aorta based on a distance from the descending aorta to the circle center of the heart $O_1$ and a distance from the spine to the circle center of the heart $O_1$ comprises:

setting an radius threshold of the circle formed from the descending aorta to an edge of the heart to $r_{threshold}$;
acquiring an approximate region of the spine and an approximate region of the descending aorta based on the distance between the descending aorta and the heart being less than the distance between the spine and the heart;
removing one or more error pixel points based on the approximate region of the descending aorta, and obtaining an image of the descending aorta, i.e., a circle corresponding to the descending aorta.

Optionally, in the above method for acquiring centerline of aorta based on CT sequence images, the manner for acquiring an approximate region of the spine and an approximate region of the descending aorta based on the distance between the descending aorta and the heart being less than the distance between the spine and the heart comprises:

if a circle obtained by the Hoff detection algorithm meets the condition that its radius r > $r_{threshold}$, then this circle is the circle corresponding to the spine and is the approximate region of the spine, and the center and radius need not to be recorded;
if a circle obtained by the Hoff detection algorithm meets the condition that its radius r ≤ $rt_{hreshold}$, then this circle may be the circle corresponding to the descending aorta and is the approximate region of the descending aorta, and the center and radius need to be recorded.

Optionally, in the above method for acquiring centerline of aorta based on CT sequence images, the manner for removing one or more error pixel points based on the approximate region of the descending aorta, and obtaining an image of the descending aorta, i.e., a circle corresponding to the descending aorta, comprises: screening the centers and radii of the circles within the approximate region of the descending aorta, removing the circles with centers of large deviations between adjacent slices, i.e., removing the one or more error pixel points, and forming a list of seed points of the descending aorta to obtain an image of the descending aorta, i.e., a circle corresponding to the descending aorta.

Optionally, in the above method for acquiring centerline of aorta based on CT sequence images, the manner for removing the descending aorta from the first image to obtain the second image comprises:

if the number of circle centers in the list of seed points is greater than or equal to 3, calculating an average radius $\bar{r}$ and an average circle center point $P_3$ for all the seed points;

calculating an average $\overline{Q}_2$ of the grayscale values of all pixel points PO within the circle with $P_3$ as the circle center and $\bar{r}$ as the radius, setting a parameter a to obtain a grayscale threshold of a connected domain $Q_{connected} = \overline{Q}_2 - a$, wherein a is a positive number;

recalculating a center point $P_4$ of the connected domain;

calculating the Euclidean distance between $P_3$ and $P_4$ on each layer of two-dimensional slice in turn, starting from the bottom layer;

if the Euclidean distance between $P_3$ and $P_4$ on the two-dimensional slice of the b-th layer is greater than m, setting the pixel value corresponding to the pixel points PO of all two-dimensional slices of the b-th layer and its above to 0, to obtain an image corresponding to the first layer to the (b-1)-th layer as a second image, where b is a positive number greater than or equal to 2 and $m \geq 5$;

if the Euclidean distance between $P_3$ and $P_4$ on the two-dimensional slice of the b-th layer is less than or equal to m, extracting one or more pixel points with grayscale value greater than 0 within the two-dimensional slice of the b-th layer, and setting the $P_3$ point on the two-dimensional slice of the b-th layer as the $P_4$ point; setting the pixel value corresponding to the one or more pixel points PO of all two-dimensional slices of the (b+1)-th layer and its above to 0, to obtain an image corresponding to the first layer to the b-th layer as a second image.

Optionally, in the above method for acquiring centerline of aorta based on CT sequence images, the manner for removing spine based on the CT three-dimensional image comprises:

setting a grayscale threshold of spine $Q_{spine}$ based on the gravity center of spine $P_1$ and the gravity center of heart $P_2$;

extracting one or more pixel points in the second image corresponding to one or more pixel points PO with a grayscale value greater than $Q_{spine}$;

extracting a connected domain of the spine based on the extracted one or more pixel points, and removing the connected domain of the spine to obtain a third image.

Optionally, in the above method for acquiring centerline of aorta based on CT sequence images, the manner for removing ribs based on the CT three-dimensional image comprises:

extracting one or more pixel points in the third image corresponding to one or more pixel points PO with a grayscale value greater than 0 and setting grayscale value of the one or more pixel points corresponding to the second image to 0 to obtain a fourth image;

setting a grayscale threshold of ribs $Q_{rib}$, extracting one or more pixel points with grayscale value Q > $Q_{rib}$ from the fourth image, extracting a connected domain of the ribs based on the extracted one or more pixel points, removing the connected domain of the ribs, and obtaining a fifth image with the descending aorta, spine, and ribs removed, where the fifth image is an image containing left atrium, left ventricle and without interfering coronary artery tree.

Optionally, in the above method for acquiring centerline of aorta based on CT sequence images, the manner for layered slicing the fifth image to obtain a group of binarized images comprises:

A) layered slicing the fifth image starting from a top layer to obtain a second group of two-dimensional images;

B) setting a coronary tree grayscale threshold $Q_{coronary\ 1}$; based on

$$\left\{ \begin{array}{l} 0 \leq Q_m < Q_{coronary\ 1}, P(m) = 0 \\ Q_{coronary\ 1} \leq Q_m \leq 255, P(m) = 1 \end{array} \right\}, bi\text{-}$$

narizing the slices of each layer of the fifth image, and removing impurity points from the fifth image to obtain the group of binarized images;

wherein m is a positive integer, $Q_m$ denotes the grayscale value corresponding to the m-th pixel point PO, and P(m) denotes the pixel value corresponding to the m-th pixel point PO.

Optionally, in the above method for acquiring centerline of aorta based on CT sequence images, the manner for obtaining a circle center and an radius corresponding to the circle from each layer of slice in the group of binarized images comprises:

C) creating a search engine list for each layer of slice in the group of binarized images, comprising: a point list and an radius list, and filling the points extracted from the fifth image with a pixel value of 1 correspondingly into the point list of each layer of slice;

D) setting a threshold for the number of pixel points in the point list of each layer of slice to $N_{threshold\ 1}$, $N_{threshold\ 2}$, and a threshold for radius to $R_{threshold\ 1}$, $R_{threshold\ 2}$, and performing the process from step E to step M for each layer of slice in turn starting from the top layer;

E) if $N_k \leq N_{threshold\ 1}$, $R_k = R_{threshold\ 1} \pm m$, wherein $N_k$ denotes the number of pixel points in the point list of the k-th layer of slice, then detecting 1 circle within the k-th layer of slice and performing step I with the circle center of the circle as a circle center $O_k$, and performing step H if no circle is detected;

F) if $N_k \leq N_{threshold\ 1}$, $R_k \neq R_{threshold\ 1} \pm m$, then detecting 3 circles within the k-th layer of slice, and performing step I if 3 circles are detected, and performing step H if 3 circles are not detected;

G) If $N_k > N_{threshold\ 1}$, redetermining a circle center by taking a point within the (k-1)-th layer of slice that is closest to an end point D in the point list as a circle center $O_k$, performing step I, and if no circle is detected, performing step H;

H) detecting the relationship between $N_k$ and $N_{threshold\ 1}-1$ and repeating step E to step G, if still no circle is detected, detecting the relationship between N and $N_{threshold\ 1}-2$ and repeating step E to step G; and so on until a circle center $O_k$ is found;

I) finding 3 points with a gray value of 0 along a positive direction of a X-axis, a negative direction of a X-axis and a positive direction of a Y-axis respectively by taking the circle center $O_k$ as a start point; determining a circle based on the 3 points to find the circle center $P_{5k}$ and the radius $R_k$.

Optionally, in the above method for acquiring centerline of aorta based on CT sequence images, the manner for filtering the circle center $P_{5k}$, and generating a new point list comprises:

J) if the radius of the k-th layer of slice $R_k < R_{threshold\ 2}$, then repeating the process from step E to step I until a circle center $P_{5k}$ with the radius $R_k \geq R_{threshold\ 2}$ is found;

K) if the gray value of the circle center $P_{5k}$ on the fifth image is less than 0, repeating the process from step E to step I until the circle center $P_{5k}$ with radius $R_1 \geq R_{threshold\ 2}$ and grayscale value greater than or equal to 0 is found;

L) adding the circle center $P_{5k}$ with $R_1 \geq R_{threshold\ 2}$ and grayscale value greater than or equal to 0 into the point list, generating a new radius list, and adding the radius $R_k$ into the radius list.

Optionally, in the above method for acquiring centerline of aorta based on CT sequence images, the manner for filtering the radius $R_k$, and generating a new radius list comprises:

M) if $N_k < N_{threshold\ 2}$, comparing a distance L between the circle center $P_{5k}$ and the end point in the point list with $L_{threshold}$, and if $L > L_{threshold}$, repeating step E to step N until the number of points in the point list $N_k \geq N_{threshold\ 2}$, or $L \leq L_{threshold}$;

N) if $N_k \geq N_{threshold\ 2}$, or $N_k < N_{threshold\ 2}$, $L \leq L_{threshold}$ then replacing the radius value of a point far from the circle center $P_{5k}$ with an average radius value of the remaining points as $R_k$, filling the radius $R_k$ into the radius list and generating a new radius list.

In a second aspect, the present application provides a computer storage medium, the above method for acquiring centerline of aorta based on CT sequence images is implemented when a computer program is executed by a processor.

In a third aspect, the present application provides a system for acquiring coronary tree based on CT sequence images, comprising: a CT data acquisition device, a gravity center of heart extraction device, a gravity center of spine extraction device, a filtering device and a centerline of aorta extraction device;

the CT data acquisition device is configured for acquiring three-dimensional data of CT sequence images;

the gravity center of heart extraction device is connected to the CT data acquisition device and for acquiring a gravity center of heart based on the three-dimensional data;

the gravity center of spine extraction device is connected to the CT data acquisition device and configured for acquiring a gravity center of spine based on the three-dimensional data;

the filtering device is connected to the CT data acquisition device, the gravity center of heart extraction device, and the gravity center of spine extraction device, for filtering impurity data from the three-dimensional data of CT sequence images to obtain an image containing left atrium, left ventricle and without interfering coronary artery tree;

the centerline of aorta extraction device comprises a binarized image processing unit, a circle center extraction unit, an radius extraction unit and a centerline of aorta extraction unit, the binarized image processing unit is connected to the circle center extraction unit, the radius extraction unit and the centerline of aorta extraction unit, the centerline of aorta extraction unit is connected to the circle center extraction unit and the radius extraction unit;

the binarized image processing unit is configured for layered slicing the image containing left atrium, left ventricle and without interfering coronary artery tree to obtain a group of binarized images;

the circle center extraction unit is configured for obtaining a circle center from each layer of slice in the group of binarized images, to generate a point list;

the radius extraction unit is configured for obtaining an radius of the corresponding circle based on the circle center, to generate an radius list;

the centerline of aorta extraction unit is configured for mapping one or more pixel points in the point list and the radius list of each layer of slice to the image containing left atrium, left ventricle and without interfering coronary artery tree to obtain a centerline of aorta.

The beneficial effects resulting from the solutions provided by embodiments of the present application include at least that:
The present application provides a method for acquiring centerline of aorta based on CT sequence images. By first screening out the gravity center of heart and the gravity center of spine, locating the position of the heart and the spine, then removing the lung tissue, descending aorta, spine, and ribs from the CT images based on the position of the heart and spine, and accurately extracting the centerline of aorta from the processed images, computation burden is reduced, with simple algorithms, easy operation, fast computing speed, scientific design and accurate image processing.

## BRIEF DESCRIPTION OF DRAWINGS

The drawings illustrated herein are used to provide a further understanding of the present invention, form a part of the present invention, and the schematic embodiments of the invention and their descriptions are used to explain the present invention and do not constitute an undue limitation of the present invention. Wherein:

FIG. 1 is a flow chart of the method for acquiring centerline of aorta based on CT sequence images;

FIG. 2 is a flow chart of the method for acquiring gravity center of heart $P_2$ of the present application;

FIG. 3 is a flow chart of the method for removing lung tissue of the present application;

FIG. 4 is a flow chart of the method for removing descending aorta of the present application;

FIG. 5 is a flow chart of S3040 of the present application;

FIG. 6 is a flow chart of S3050 of the present application;

FIG. 7 is a flow chart of S3060 of the present application;

FIG. 8 is a flow chart of the method for removing spine of the present application;

FIG. 9 is a flow chart of the method for removing ribs;

FIG. 10 is a block diagram of the structure of the system for acquiring centerline of aorta based on CT sequence images of the present application;

FIG. 11 is a schematic diagram of the structure of the first image of the present application;

FIG. 12 is a schematic diagram of the structure of the second image of the present application;

FIG. 13 is a schematic diagram of the structure of the third image of the present application;

FIG. 14 is a schematic diagram of the structure of the fifth image of the present application;

Reference signs of the drawings are illustrated as follows:
CT data acquisition device 100, gravity center of heart extraction device 200, gravity center of spine extraction device 300, filtering device 400, centerline of aorta extraction device 500, binarized image processing unit 510, circle center extraction unit 520, radius extraction unit 530, and centerline of aorta extraction unit 540.

**DETAILED DESCRIPTION**

In order to make the purpose, technical solutions and advantages of the present invention more clear, the following will be a clear and complete description of the technical solutions of the present invention in conjunction with specific embodiments of the present invention and the corresponding drawings. Obviously, the described embodiments are only a part of the embodiments of the present invention, and not all of them. Based on the embodiments in the present invention, all other embodiments obtained by a person of ordinary skill in the art without making creative labor fall in the protection scope of the present invention.

A number of embodiments of the present invention will be disclosed in the following figures, and for the sake of clarity, many of the practical details will be described together in the following description. It should be understood, however, that these practical details should not be used to limit the present invention. That is, in some embodiments of the present invention, these practical details are not necessary. In addition, for the sake of simplicity, some of the commonly known structures and components will be illustrated in the drawings in a simple schematic manner.

Since the CT data in the prior art is not filtered, it leads to a large amount of calculations and has the problems of slow and inaccurate calculations.

Embodiment 1:

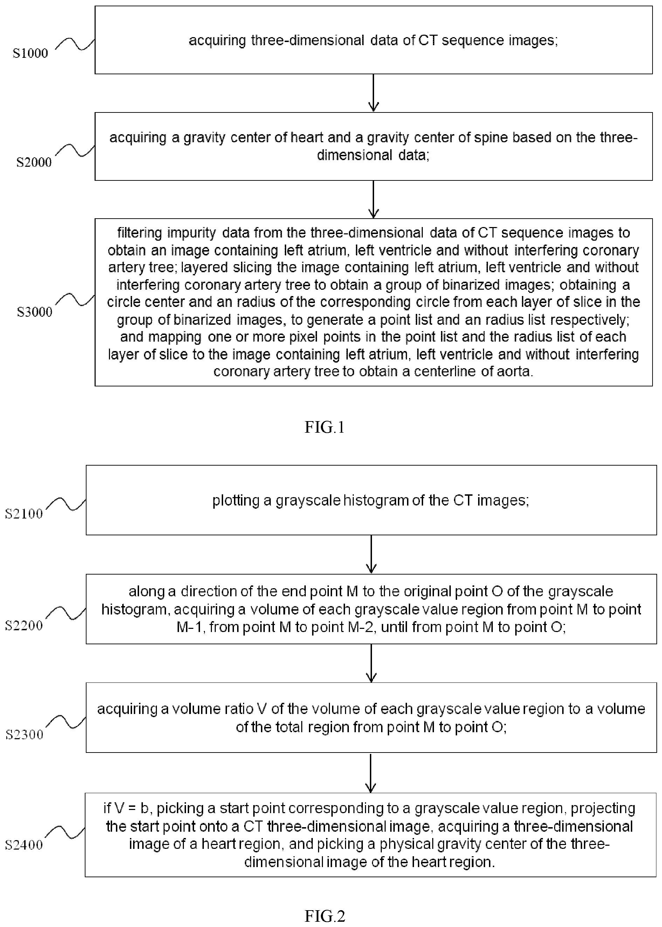

To solve the above problems, the present application provides a method for acquiring centerline of aorta based on CT sequence images, as shown in FIG. 1, it comprises:
S1000, acquiring three-dimensional data of CT sequence images, comprising:
S2000, acquiring a gravity center of heart and a gravity center of spine based on the three-dimensional data;

    (1) as shown in FIG. 2, the method for acquiring a gravity center of heart $P_2$ comprising:

        S2100, plotting a grayscale histogram of the CT images;

        S2200, along a direction of the end point M to the original point O of the grayscale histogram, acquiring a volume of each grayscale value region from point M to point M-1, from point M to point M-2, until from point M to point O;

        S2300, acquiring a volume ratio V of the volume of each grayscale value region to a volume of the total region from point M to point O;

        S2400, if V = b, picking a start point corresponding to a grayscale value region, projecting the start point onto a CT three-dimensional image, acquiring a three-dimensional image of a heart region, and picking a physical gravity center of the three-dimensional image of the heart region, which is the gravity center of heart $P_2$; wherein b denotes a constant, 0.2 < b < 1. Preferably, 0.4 < b < 1, and b = 0.6 works best.

    (2) The method for obtaining a gravity center of spine $P_1$ comprises:
if V = a, picking a start point corresponding to a grayscale value region, projecting the start point onto a CT three-dimensional image, acquiring a three-dimensional image of a bone region, and picking a physical gravity center of the three-dimensional image of the bone region, which is the gravity center of spine $P_1$; wherein a denotes a constant, 0 < a < 0.2. Preferably, 0 < a < 0.1, and a = 0.005 works best.

S3000, Filtering impurity data from the three-dimensional data of CT sequence images to obtain an image containing left atrium, left ventricle and without interfering coronary artery tree; layered slicing the image containing left atrium, left ventricle and without interfering coronary artery tree to obtain a group of binarized images; obtaining a circle center and an radius of the corresponding circle from each layer of slice in the group of binarized images, to generate a point list and an radius list respectively; and mapping one or more pixel points in the point list and the radius list of each layer of slice to the image containing left atrium, left ventricle and without interfering coronary artery tree to obtain a centerline of aorta.

Filtering impurity data from the three-dimensional data of CT sequence images comprises: removing lung tissue, descending aorta, spine, and ribs from the CT three-dimensional image to obtain an image containing left atrium, left ventricle and without interfering coronary artery tree, specifically:

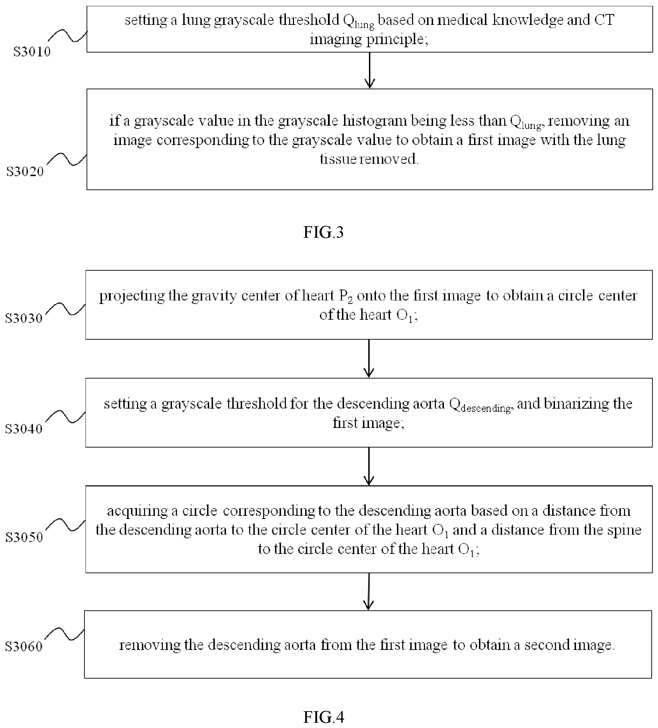

    I) as shown in FIG. 3, the method for removing lung tissue comprising:

        S3010, setting a lung grayscale threshold $Q_{lung}$ based on medical knowledge and CT imaging principle;

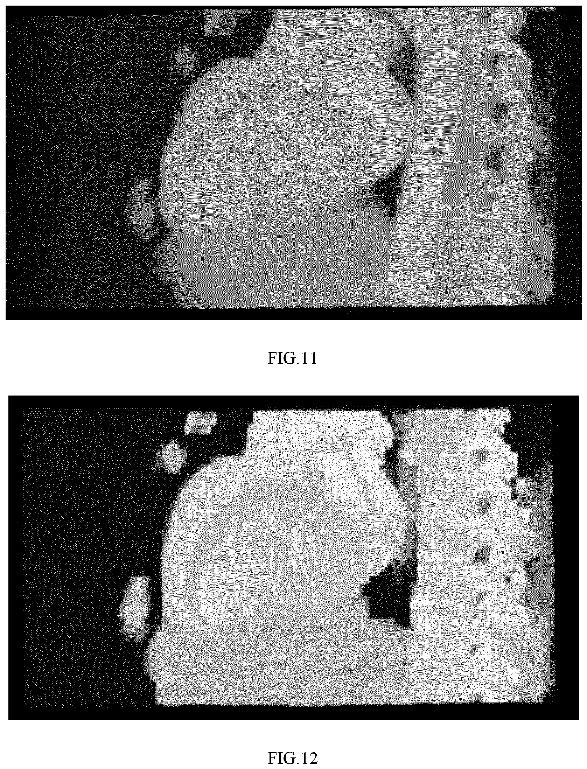

        S3020, if a grayscale value in the grayscale histogram being less than $Q_{lung}$, removing an image corresponding to the grayscale value to obtain a first image with the lung tissue removed, as shown in FIG. 11. Preferably, $Q_{lung}$ = -150 - -50, and $Q_{lung}$ = -100 works best.

    II) As shown in FIG. 4, the method for removing descending aorta comprises:

S3030, projecting the gravity center of heart $P_2$ onto the first image to obtain a circle center of the heart $O_1$;

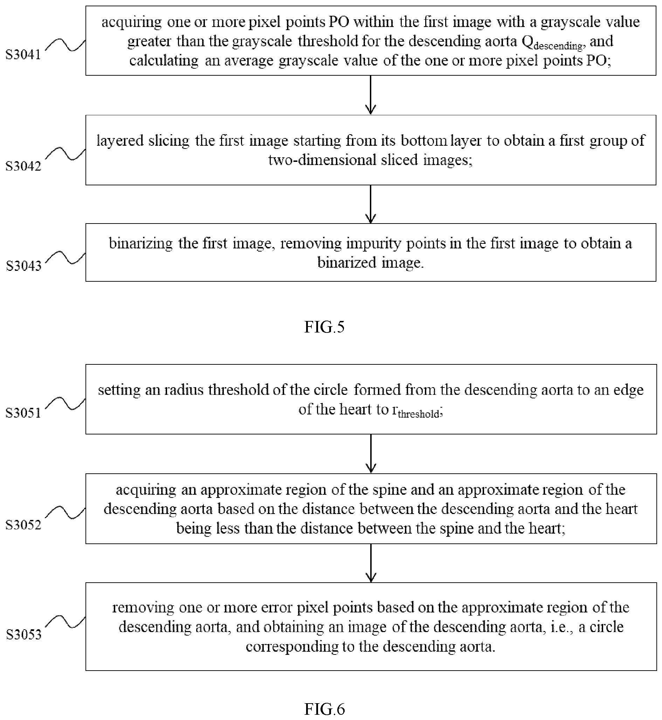

S3040, setting a grayscale threshold for the descending aorta $Q_{descending}$, and binarizing the first image; preferably, $Q_{descending}$ = 200, as shown in FIG. 5, comprising:

S3041, acquiring one or more pixel points PO within the first image with a grayscale value greater than the grayscale threshold for the descending aorta $Q_{descending}$, and calculating an average grayscale value of the one or more pixel points PO;

S3042, layered slicing the first image starting from its bottom layer to obtain a first group of two-dimensional sliced images;

S3043, based on

$$\begin{cases} 0 \le Q_m < Q_{coronary\,1}, P(m) = 0 \\ Q_{coronary\,1} \le Q_m \le 255, P(m) = 1 \end{cases}$$

, binarizing the first image, removing impurity points in the first image to obtain a binarized image, wherein k is a positive integer, $Q_k$ denotes a grayscale value corresponding to the k-th pixel point PO, and P(k) denotes a pixel value corresponding to the k-th pixel point PO. Preferably, $Q_{lung}$ = 150 - 220, and $Q_{lung}$ = 200 works best.

S3050, acquiring a circle corresponding to the descending aorta based on a distance from the descending aorta to the circle center of the heart $O_1$ and a distance from the spine to the circle center of the heart $O_1$, as shown in FIG. 6, comprises:

S3051, setting an radius threshold of the circle formed from the descending aorta to an edge of the heart to $r_{threshold}$; preferably, $r_{threshold}$ = 5 ~ 15;

S3052, acquiring an approximate region of the spine and an approximate region of the descending aorta based on the distance between the descending aorta and the heart being less than the distance between the spine and the heart, comprising:

(1) if a circle obtained by the Hoff detection algorithm meets the condition that its radius r > $rt_{hreshold}$, then this circle is a circle corresponding to the spine and is the approximate region of the spine, and the center and radius need not to be recorded;

(2) if a circle obtained by the Hoff detection algorithm meets the condition that its radius r ≤ $r_{threshold}$, then this circle may be a circle corresponding to the descending aorta and is the approximate region of the descending aorta, and the center and radius need to be recorded.

S3053, Removing one or more error pixel points based on the approximate region of the descending aorta, and obtaining an image of the descending aorta, i.e., a circle corresponding to the descending aorta, comprises:

screening the centers and radii of the circles within the approximate region of the descending aorta, removing the circles with centers of large deviations between adjacent slices, i.e., removing the one or more error pixel points, and forming a list of seed points of the descending aorta to obtain an image of the descending aorta, i.e., a circle corresponding to the descending aorta.

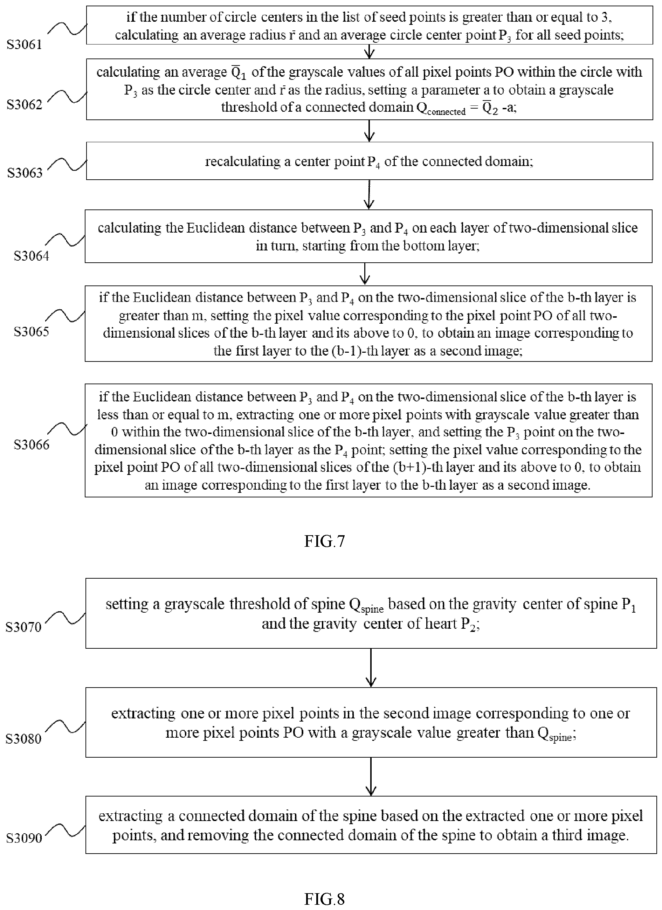

S3060, Removing the descending aorta from the first image to obtain a second image as shown in FIG. 12, as shown in FIG. 7, comprises:

S3061, if the number of circle centers in the list of seed points is greater than or equal to 3, calculating an average radius $\bar{r}$ and an average circle center point $P_3$ for all seed points;

S3062, calculating an average $\overline{Q}_2$ of the grayscale values of all pixel points PO within the circle with $P_3$ as the circle center and $\bar{r}$ as the radius, setting a parameter a to obtain a grayscale threshold of a connected domain $Q_{connected}$ = $\overline{Q}_2$ - a, wherein a is a positive number; preferably, a = 20 - 40, and a = 30 works best.

S3063, Recalculating a center point $P_4$ of the connected domain;

S3064, calculating the Euclidean distance between $P_3$ and $P_4$ on each layer of two-dimensional slice in turn, starting from the bottom layer;

S3065, if the Euclidean distance between $P_3$ and $P_4$ on the two-dimensional slice of the b-th layer is greater than m, setting the pixel value corresponding to the pixel points PO of all two-dimensional slices of the b-th layer and its above to 0, to obtain an image corresponding to the first layer to the (b-1)-th layer as a second image, where b is a positive number greater than or equal to 2 and m ≥ 5;

S3066, if the Euclidean distance between $P_3$ and $P_4$ on the two-dimensional slice of the b-th layer is less than or equal to m, extracting one or more pixel points with grayscale value greater than 0 within the two-dimensional slice of the b-th layer, and setting the $P_3$ point on the two-dimensional slice of the b-th layer as the $P_4$ point; setting the pixel value corresponding to the pixel points PO of all two-dimensional slices of the (b+1)-th layer and its above to 0, to obtain an image corresponding to the first layer to the b-th layer as a second image.

II) As shown in FIG. 8, the method for removing spine comprises:

S3070, setting a grayscale threshold of spine $Q_{spine}$ based on the gravity center of spine $P_1$ and the gravity center of heart $P_2$;

S3080, extracting one or more pixel points in the second image corresponding to one or more pixel points PO with a grayscale value greater than $Q_{spine}$;

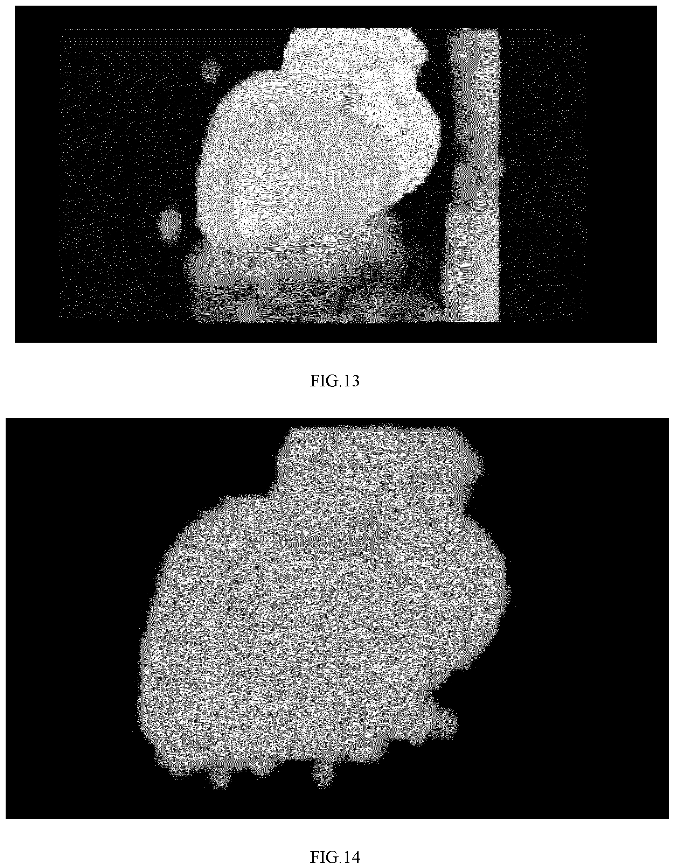

S3090, extracting a connected domain of the spine based on the extracted one or more pixel points, and removing the connected domain of the spine to obtain a third image as shown in FIG. 13.

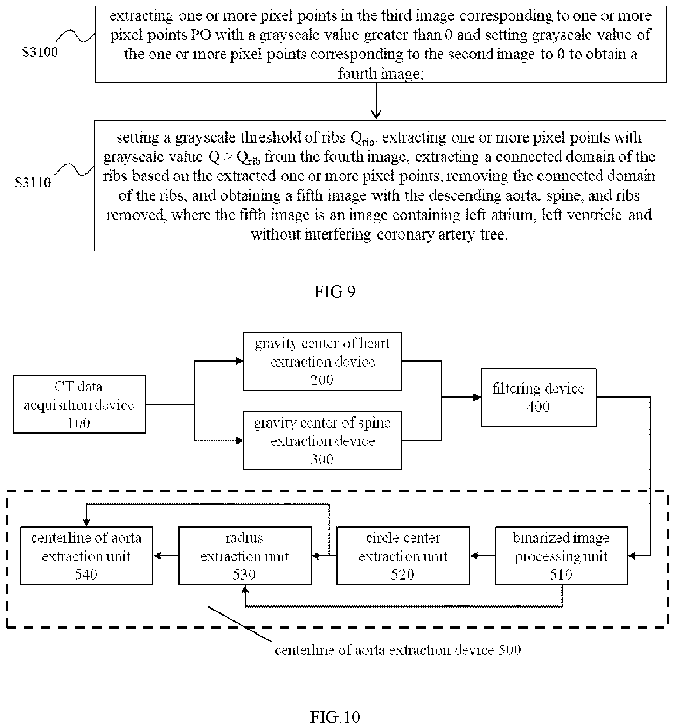

II) As shown in FIG. 9, the method for removing ribs comprises:

S3100, extracting one or more pixel points in the third image corresponding to one or more pixel points PO with a grayscale value greater than 0 and setting grayscale value of the one or more pixel points corresponding to the second image to 0 to obtain a fourth image;

S3110, setting a grayscale threshold of ribs $Q_{rib}$, extracting one or more pixel points with grayscale value $Q > Q_{rib}$ from the fourth image, extracting a connected domain of the ribs based on the extracted one or more pixel points, removing the connected domain of the ribs, and obtaining a fifth image as shown in FIG. 14 with the descending aorta, spine, and ribs removed, where the fifth image is an image containing left atrium, left ventricle and without interfering coronary artery tree. Preferably, $Q_{rib}$ = 10 - 40, and $Q_{rib}$ = 30 works best.

S3120, Extracting a centerline of aorta from the fifth image, comprises:

S3121, layered slicing the fifth image to obtain a group of binarized images, comprising:

A) layered slicing the fifth image starting from a top layer to obtain a second group of two-dimensional images;

B) setting a coronary tree grayscale threshold $Q_{coronary\,1}$; based on

$$\left\{ \begin{array}{l} 0 \leq Q_m < Q_{coronary\,1}, P(m) = 0 \\ Q_{coronary\,1} \leq Q_m \leq 255, P(m) = 1 \end{array} \right\}$$

, binarizing the slices of each layer of the fifth image, and removing impurity points from the fifth image to obtain the group of binarized images;

wherein m is a positive integer, $Q_m$ denotes the grayscale value corresponding to the m-th pixel point PO, and P(m) denotes the pixel value corresponding to the m-th pixel point PO.

S3122, Obtaining a circle center $P_{5k}$ and a radius $R_k$ of a corresponding circle on each layer of slice from the group of binarized images, k denoting the k-th layer of slice, comprises:

C) creating a search engine list for each layer of slice in the group of binarized images, comprising: a point list and an radius list, and filling the points extracted from the fifth image with a pixel value of 1 correspondingly into the point list of each layer of slice;

D) setting a threshold for the number of pixel points in the point list of each layer of slice to $N_{threshold\,1}$, $N_{threshold\,2}$, and a threshold for radius to $R_{threshold\,1}$, $R_{threshold\,2}$, and performing the process from step E to step M for each layer of slice in turn starting from the top layer; preferably, $R_{threshold\,1}$ =15mm and $R_{threshold\,2}$ =3mm.

E) If $N_k \leq N_{threshold\,1}$, $R_k = R_{threshold\,1} \pm m$, wherein $N_k$ denotes the number of pixel points in the point list of the k-th layer of slice, then detecting 1 circle within the k-th layer of slice and performing step I with the circle center of the circle as a circle center $O_k$, and performing step H if no circle is detected;

F) if $N_k \leq N_{threshold\,1}$, $R_k \neq R_{threshold\,1} \pm m$, then detecting 3 circles within the k-th layer of slice, and performing step I if 3 circles are detected, and performing step H if 3 circles are not detected; preferably, m = 0-0.5.

G) If $N_k > N_{threshold\,1}$, redetermining a circle center by taking a point within the (k-1)-th layer of slice that is closest to an end point D in the point list as a circle center $O_k$, performing step I, and if no circle is detected, performing step H; preferably, $N_{threshold\,1}$ = 4.

H) Detecting the relationship between $N_k$ and $N_{threshold\,1}$-1 and repeating step E to step G, if still no circle is detected, detecting the relationship between N and $N_{threshold\,1}$-2 and repeating step E to step G; and so on until a circle center $O_k$ is found;

I) finding 3 points with a gray value of 0 along a positive direction of a X-axis, a negative direction of a X-axis and a positive direction of a Y-axis respectively by taking the circle center $O_k$ as a start point; determining a circle based on the 3 points to find the circle center $P_{5k}$ and the radius $R_k$.

S3123, Filtering the circle center $P_{5k}$, and generating a new point list, comprise:

J) if the radius of the k-th layer of slice $R_k < R_{threshold\ 2}$, then repeating the process from step E to step I until a circle center $P_{5k}$ with the radius $R_k \geq R_{threshold\ 2}$ is found;

K) if the gray value of the circle center $P_{5k}$ on the fifth image is less than 0, repeating the process from step E to step I until a circle center $P_{5k}$ with radius $R_1 \geq R_{threshold\ 2}$ and grayscale value greater than or equal to 0 is found;

L) adding the circle center $P_{5k}$ with $R_1 \geq R_{threshold\ 2}$ and grayscale value greater than or equal to 0 into the point list, generating a new radius list, and adding the radius $R_k$ into the radius list.

S3124, Filtering the radius $R_k$, and generating a new radius list, comprise:

M) if $N_k < N_{threshold\ 2}$, comparing a distance L between the circle center $P_{5k}$ and the end point in the point list with $L_{threshold}$, and if $L > L_{threshold}$, repeating step E to step N until the number of points in the point list $N_k \geq N_{threshold\ 2}$, or $L \leq L_{threshold}$; preferably, $L_{threshold}$ = 8mm.
N) If $N_k \geq N_{threshold\ 2}$, or $N_k < N_{threshold\ 2}$, $L \leq L_{threshold}$ then replacing the radius value of a point far from the circle center $P_{5k}$ with an average radius value of the remaining points as $R_k$, filling the radius $R_k$ into the radius list and generating a new radius list. Preferably, $N_{threshold\ 2}$ = 3.

S3125, mapping one or more pixel points located in the point list and the radius list within each layer of slice to the fifth image, and obtaining a centerline of aorta in the fifth image.

The present application provides a method for acquiring centerline of aorta based on CT sequence images. By first screening out the gravity center of heart and the gravity center of spine, locating the position of the heart and the spine, then removing the lung tissue, descending aorta, spine, and ribs from the CT images based on the position of the heart and spine, and accurately extracting the centerline of aorta from the processed images, computation burden is reduced, with simple algorithms, easy operation, fast computing speed, scientific design and accurate image processing.

Embodiment 2:

As shown in FIG. 10, the present application provides a system for acquiring coronary tree based on CT sequence images, comprising: a CT data acquisition device 100, a gravity center of heart extraction device 200, a gravity center of spine extraction device 300, a filtering device 400 and a centerline of aorta extraction device 500; the CT data acquisition device 100 is configured for acquiring three-dimensional data of CT sequence images; the gravity center of heart extraction device 200 is connected to the CT data acquisition device 100 and configured for acquiring a gravity center of heart based on the three-dimensional data; the gravity center of spine extraction device 300 is connected to the CT data acquisition device 100 and configured for acquiring a gravity center of spine based on the three-dimensional data; the filtering device 400 is connected to the CT data acquisition device 100, the gravity center of heart extraction device 200, and the gravity center of spine extraction device 300, for filtering impurity data from the three-dimensional data of CT sequence images to obtain an image containing left atrium, left ventricle and without interfering coronary artery tree; the centerline of aorta extraction device 500 comprises a binarized image processing unit 510, a circle center extraction unit 520, an radius extraction unit 530 and a centerline of aorta extraction unit 540, the binarized image processing unit 510 is connected to the circle center extraction unit 520, the radius extraction unit 530 and the centerline of aorta extraction unit 540, the centerline of aorta extraction unit 540 is connected to the circle center extraction unit 520 and the radius extraction unit 530; the binarized image processing unit 510 is configured for layered slicing the image containing left atrium, left ventricle and without interfering coronary artery tree to obtain a group of binarized images; the circle center extraction unit 520 is configured for obtaining a circle center from each layer of slice in the group of binarized images, to generate a point list; the radius extraction unit 530 is configured for obtaining an radius of the corresponding circle based on the circle center, to generate an radius list; the centerline of aorta extraction unit 540 is configured for mapping one or more pixel points in the point list and the radius list of each layer of slice to the image containing left atrium, left ventricle and without interfering coronary artery tree to obtain a centerline of aorta.

The present application provides a computer storage medium where a computer program is executed by a processor to implement the above method for acquiring centerline of aorta based on CT sequence images.

Those skilled in the art know that aspects of the present invention can be implemented as systems, methods, or computer program products. As such, aspects of the present invention may be implemented in the form of: a fully hardware implementation, a fully software implementation (including firmware, resident software, microcode, etc.), or a combination of hardware and software aspects, collectively referred to herein as a "circuit", "module" or "system". In addition, in some embodiments, aspects of the present invention may also be implemented in the form of a computer program product in one or more computer-readable media containing computer-readable program code. Embodiments of the methods and/or systems of the present invention may be implemented in a manner that involves performing or completing selected tasks manually, automatically, or in a combination thereof.

For example, the hardware for performing the selected tasks based on the embodiments of the present invention may be implemented as a chip or circuit. As software, the selected tasks based on the embodiments of the present invention may be implemented as a plurality of software instructions to be executed by a computer using any appropriate operating system. In exemplary embodiments of the present invention, one or more tasks, as in the exemplary embodiments based on the methods and/or systems herein, is performed by a data processor, such as a computing platform for executing a plurality of instructions. Optionally, the data processor includes volatile storage for storing instructions and/or data, and/or non-volatile storage for storing instructions and/or data, such as a magnetic hard disk and/or removable media. Optionally, a network connection is also provided. Optionally, a display and/or user input device, such as a keyboard or mouse, is also provided.

Any combination of one or more computer readable may be utilized. A computer-readable medium may be a computer-readable signal medium or a computer-readable storage medium. A computer-readable storage medium may be, for example - but not limited to - an electrical, magnetic, optical, electromagnetic, infrared, or semiconductor system, device or component, or any combination thereof. More specific examples of computer-readable storage media (a non-exhaustive list) would include each of the following:

An electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage component, a magnetic storage component, or any suitable combination of the foregoing. In this specification, the computer-readable storage medium may be any tangible medium that contains or stores a program that can be used by or in combination with an instruction execution system, device or component.

The computer-readable signal medium may include a data signal propagated in a baseband or as part of a carrier wave that carries computer-readable program code. This propagated data signal can take a variety of forms, including but not limited to electromagnetic signals, optical signals or any suitable combination of the above. The computer-readable signal medium may also be any computer-readable medium other than a computer-readable storage medium that sends, propagates, or transmits a program for being used by or in conjunction with an instruction execution system, device or component.

The program code contained on the computer-readable medium may be transmitted using any suitable medium, including (but not limited to) wireless, wired, fiber optic, RF, etc., or any suitable combination of the above.

For example, computer program code for performing operations of aspects of the present invention may be written in any combination of one or more programming languages, including object-oriented programming languages such as Java, Smalltalk, C++, and conventional procedural programming languages such as "C" programming language or the like. The program code may be executed entirely on an user's computer, partially on an user's computer, as a stand-alone software package, partially on an user's computer and partially on a remote computer, or entirely on a remote computer or server. In the case of a remote computer, the remote computer may be connected to an user's computer via any kind of network - including a local area network (LAN) or a wide area network (WAN) - or, may be connected to an external computer (e.g., using an Internet service provider to connect via the Internet).

It should be understood that each block of the flowchart and/or block diagram, and a combination of respective blocks in the flowchart and/or block diagram, may be implemented by computer program instructions. These computer program instructions may be provided to a processor of a general purpose computer, a specialized computer, or other programmable data processing device, thereby producing a machine such that these computer program instructions, when executed by the processor of the computer or other programmable data processing device, produce a device that implements a function/action specified in one or more of the blocks in the flowchart and/or block diagram.

These computer program instructions may also be stored in a computer-readable medium that causes a computer, other programmable data processing device, or other apparatus to operate in a particular manner such that the instructions stored in the computer-readable medium result in an article of manufacture that includes instructions to implement the function/action specified in one or more blocks in the flowchart and/or block diagram.

Computer program instructions may also be loaded onto a computer (e.g., a coronary artery analysis system) or other programmable data processing apparatus to cause a series of operational steps to be performed on the computer, other programmable data processing apparatus or other apparatus to produce a computer-implemented process, such that the instructions executed on the computer, other programmable device or other apparatus provide a process for implementing the function/action specified in a block of the flowchart and/or one or more block diagram.

The above specific examples of the present invention further detail the purpose, technical solutions and beneficial effects of the present invention. It should be understood that the above are only specific embodiments of the present invention and are not intended to limit the present invention, and that any modifications, equivalent replacements, improvements, etc. made within the spirit and principles of the present invention shall be included within the protection scope of the present invention.

**Claims**

1.  A method for acquiring centerline of aorta based on CT sequence images, **characterized by** comprising:

    acquiring three-dimensional data of CT sequence images;
    acquiring a gravity center of heart and a gravity center of spine based on the three-dimensional data;
    filtering impurity data from the three-dimensional data of CT sequence images, to obtain an image containing left atrium, left ventricle and without interfering coronary artery tree;
    layered slicing the image containing left atrium, left ventricle and without interfering coronary artery tree, to obtain a group of binarized images;
    obtaining a circle center and an radius corresponding to the circle from each layer of slice in the group of binarized images, to generate a point list and an radius list;
    mapping one or more pixel points located in the point list and the radius list within each layer of slice to the image containing left atrium, left ventricle and without interfering coronary artery tree, and obtaining a centerline of aorta.

2.  The method for acquiring centerline of aorta based on CT sequence images according to claim 1, **characterized in that** the manner for acquiring a gravity center of heart based on the three-dimensional data comprises:

    plotting a grayscale histogram of the CT images;
    along a direction of the end point M to the original point O of the grayscale histogram, acquiring a volume of each grayscale value region from point M to point M-1, from point M to point M-2, until from point M to point O;
    acquiring a volume ratio V of the volume of each grayscale value region to a volume of the total region from point M to point O;
    if V = b, picking a start point corresponding to the grayscale value region, projecting the start point onto the CT three-dimensional image, acquiring a three-dimensional image of a heart region, and picking a physical gravity center of the three-dimensional image of the heart region, which is the gravity center of the heart $P_2$;
wherein b denotes a constant, 0.2 < b < 1.

3.  The method for acquiring centerline of aorta based on CT sequence images according to claim 2, **characterized in that** the manner for acquiring a gravity center of spine based on the three-dimensional data comprises:

    if V = a, picking a start point corresponding to the grayscale value region, projecting the start point onto the CT three-dimensional image, acquiring a three-dimensional image of a bone region, and picking a physical gravity center of the three-dimensional image of the bone region, which is the gravity center of the spine $P_1$;
    wherein a denotes a constant, 0 < a < 0.2.

4.  The method for acquiring centerline of aorta based on CT sequence images according to claim 1, **characterized in that** the manner for filtering impurity data from the three-dimensional data of CT sequence images, to obtain an image containing left atrium, left ventricle and without interfering coronary artery tree, comprises:
    removing lung tissue, descending aorta, spine, and ribs from the CT three-dimensional image to obtain a fifth image containing left atrium, left ventricle and without interfering coronary artery tree.

5.  The method for acquiring centerline of aorta based on CT sequence images according to claim 4, **characterized in that** by the manner for removing lung tissue based on the CT three-dimensional image comprises:

    setting a lung grayscale threshold $Q_{lung}$ based on medical knowledge and CT imaging principle;
    if a grayscale value in the grayscale histogram being less than $Q_{lung}$, removing an image corresponding to the grayscale value to obtain a first image with the lung tissue removed.

6.  The method for acquiring centerline of aorta based on CT sequence images according to claim 5, **characterized in that** the manner for removing descending aorta based on the CT three-dimensional image comprises:

    projecting the gravity center of heart $P_2$ onto the first image to obtain a circle center of the heart $O_1$;
    setting a grayscale threshold for the descending aorta $Q_{descending}$, and binarizing the first image;

acquiring a circle corresponding to the descending aorta based on a distance from the descending aorta to the circle center of the heart $O_1$ and a distance from the spine to the circle center of the heart $O_1$;

removing the descending aorta from the first image to obtain a second image.

7. The method for acquiring centerline of aorta based on CT sequence images according to claim 6, **characterized in that** the manner for setting a grayscale threshold for the descending aorta $Q_{descending}$, and binarizing the first image comprises:

acquiring one or more pixel points PO within the first image with a grayscale value greater than the grayscale threshold for the descending aorta $Q_{descending}$, and calculating an average grayscale value $\overline{Q}_1$ of the one or more pixel points PO;

layered slicing the first image starting from its bottom layer to obtain a first group of two-dimensional sliced images;

based on

$$\left\{\begin{array}{l} Q_k < Q_{descending}, \ P(k) = 0 \\ Q_{descending} \leq Q_k \leq 2\overline{Q}_1, \ P(k) = 1 \\ Q_k > 2\overline{Q}_1, P(k) = 0 \end{array}\right\}$$

, binarizing the first image, removing impurity points in the first image to obtain a binarized image, wherein k is a positive integer, $Q_k$ denotes the grayscale value corresponding to the k-th pixel point PO, and P(k) denotes the pixel value corresponding to the k-th pixel point PO.

8. The method for acquiring centerline of aorta based on CT sequence images according to claim 7, **characterized in that** the manner for acquiring a circle corresponding to the descending aorta based on a distance from the descending aorta to the circle center of the heart $O_1$ and a distance from the spine to the circle center of the heart $O_1$ comprises:

setting an radius threshold of the circle formed from the descending aorta to an edge of the heart to $r_{threshold}$;

acquiring an approximate region of the spine and an approximate region of the descending aorta based on the distance between the descending aorta and the heart being less than the distance between the spine and the heart;

removing one or more error pixel points based on the approximate region of the descending aorta, and obtaining an image of the descending aorta, i.e., a circle corresponding to the descending aorta.

9. The method for acquiring centerline of aorta based on CT sequence images according to claim 8, **characterized in that** the manner for acquiring an approximate region of the spine and an approximate region of the descending aorta based on the distance between the descending aorta and the heart being less than the distance between the spine and the heart comprises:

if a circle obtained by the Hoff detection algorithm meets the condition that its radius $r > r_{threshold}$, then this circle is the circle corresponding to the spine and is the approximate region of the spine, and the center and radius need not to be recorded;

if a circle obtained by the Hoff detection algorithm meets the condition that its radius $r \leq r_{threshold}$, then this circle may be the circle corresponding to the descending aorta and is the approximate region of the descending aorta, and the center and radius need to be recorded.

10. The method for acquiring centerline of aorta based on CT sequence images according to claim 9, **characterized in that** the manner for removing one or more error pixel points based on the approximate region of the descending aorta, and obtaining an image of the descending aorta, i.e., a circle corresponding to the descending aorta, comprises:

screening the centers and radii of the circles within the approximate region of the descending aorta, removing the circles with centers of large deviations between adjacent slices, i.e., removing the one or more error pixel points, and forming a list of seed points of the descending aorta to obtain an image of the descending aorta, i.e., a circle corresponding to the descending aorta.

11. The method for acquiring centerline of aorta based on CT sequence images according to claim 10, **characterized in that** the manner for removing the descending aorta from the first image to obtain a second image comprises:

if the number of circle centers in the list of seed points is greater than or equal to 3, calculating an average radius $\overline{r}$ and an average circle center point $P_3$ for all seed points;

calculating an average $\overline{Q}_2$ of the grayscale values of all pixel points PO within the circle with $P_3$ as the circle center and $\overline{r}$ as the radius, setting a parameter a to obtain a grayscale threshold of a connected domain $Q_{connected} = \overline{Q}_2 - a$, wherein a is a positive number;

recalculating a center point $P_4$ of the connected domain;

calculating the Euclidean distance between $P_3$

and $P_4$ on each layer of two-dimensional slice in turn, starting from the bottom layer;

if the Euclidean distance between $P_3$ and $P_4$ on the two-dimensional slice of the b-th layer is greater than m, setting the pixel value corresponding to the pixel points PO of all two-dimensional slices of the b-th layer and its above to 0, to obtain an image corresponding to the first layer to the (b-1)-th layer as a second image, where b is a positive number greater than or equal to 2 and $m \geq 5$;

if the Euclidean distance between $P_3$ and $P_4$ on the two-dimensional slice of the b-th layer is less than or equal to m, extracting one or more pixel points with grayscale value greater than 0 within the two-dimensional slice of the b-th layer, and setting the $P_3$ point on the two-dimensional slice of the b-th layer as the $P_4$ point; setting the pixel value corresponding to the one or more pixel points PO of all two-dimensional slices of the (b+1)-th layer and its above to 0, to obtain an image corresponding to the first layer to the b-th layer as a second image.

12. The method for acquiring centerline of aorta based on CT sequence images according to claim 11, **characterized in that** the manner for removing spine based on the CT three-dimensional image comprises:

setting a grayscale threshold of spine $Q_{spine}$ based on the gravity center of spine $P_1$ and the gravity center of heart $P_2$;

extracting one or more pixel points in the second image corresponding to one or more pixel points PO with a grayscale value greater than $Q_{spine}$;

extracting a connected domain of the spine based on the extracted one or more pixel points, and removing the connected domain of the spine to obtain a third image.

13. The method for acquiring centerline of aorta based on CT sequence images according to claim 12, **characterized in that** the manner for removing ribs based on the CT three-dimensional image comprises:

extracting one or more pixel points in the third image corresponding to one or more pixel points PO with a grayscale value greater than 0 and setting grayscale value of the one or more pixel points corresponding to the second image to 0 to obtain a fourth image;

setting a grayscale threshold of ribs $Q_{rib}$, extracting one or more pixel points with grayscale value $Q > Q_{rib}$ from the fourth image, extracting a connected domain of the ribs based on the extracted one or more pixel point, removing the connected domain of the ribs, and obtaining a fifth image with the descending aorta, spine, and ribs removed, where the fifth image is an image containing left atrium, left ventricle and without interfering coronary artery tree.

14. The method for acquiring centerline of aorta based on CT sequence images according to claim 13, **characterized in that** the manner for layered slicing the fifth image to obtain a group of binarized images comprises:

A) layered slicing the fifth image starting from a top layer to obtain a second group of two-dimensional images;

B) setting a coronary tree grayscale threshold $Q_{coronary\,1}$; based on

$$\left\{ \begin{array}{l} 0 \leq Q_m < Q_{coronary\,1}, P(m) = 0 \\ Q_{coronary\,1} \leq Q_m \leq 255, P(m) = 1 \end{array} \right\}$$

, binarizing the slices of each layer of the fifth image, and removing impurity points from the fifth image to obtain the group of binarized images;

wherein m is a positive integer, $Q_m$ denotes the grayscale value corresponding to the m-th pixel point PO, and P(m) denotes the pixel value corresponding to the m-th pixel point PO.

15. The method for acquiring centerline of aorta based on CT sequence images according to claim 14, **characterized in that** the manner for obtaining a circle center and an radius corresponding to the circle from each layer of slice in the group of binarized images comprises:

C) creating a search engine list for each layer of slice in the group of binarized images, comprising: a point list and an radius list, and filling the points extracted from the fifth image with a pixel value of 1 correspondingly into the point list of each layer of slice;

D) setting a threshold for the number of pixel points in the point list of each layer of slice to $N_{threshold\,1}$, $N_{threshold\,2}$, and a threshold for radius to $R_{threshold\,1}$, $R_{threshold\,2}$, and performing the process from step E to step M for each layer of slice in turn starting from the top layer;

E) if $N_k \leq N_{threshold\,1}$, $R_k = R_{threshold\,1} \pm m$, wherein $N_k$ denotes the number of pixel points in the point list of the k-th layer of slice, then detecting 1 circle within the k-th layer of slice and performing step I with the circle center of the circle as a circle center $O_k$, and performing step H if no circle is detected;

F) if $N_k \leq N_{threshold\,1}$, $R_k \neq R_{threshold\,1} \pm m$, then detecting 3 circles within the k-th layer of slice,

and performing step I if 3 circles are detected, and performing step H if 3 circles are not detected;

G) if $N_k > N_{threshold\ 1}$, redetermining a circle center by taking a point within the (k-1)-th layer of slice that is closest to an end point D in the point list as a circle center $O_k$, performing step I, and if no circle is detected, performing step H;

H) detecting the relationship between $N_k$ and $N_{threshold\ 1}$-1 and repeating step E to step G, if still no circle is detected, detecting the relationship between N and $N_{threshold\ 1}$-2 and repeating step E to step G; and so on until a circle center $O_k$ is found;

I) finding 3 points with a gray value of 0 along a positive direction of a X-axis, a negative direction of a X-axis and a positive direction of a Y-axis respectively by taking the circle center $O_k$ as a start point; determining a circle based on the 3 points to find the circle center $P_{5k}$ and the radius $R_k$.

16. The method for acquiring centerline of aorta based on CT sequence images according to claim 15, **characterized in that** the manner for filtering the circle center $P_{5k}$, and generating a new point list comprises:

J) if the radius of the k-th layer of slice $R_k < R_{threshold\ 2}$, then repeating the process from step E to step I until a circle center $P_{5k}$ with the radius $R_k \geq R_{threshold\ 2}$ is found;

K) if the gray value of the circle center $P_{5k}$ on the fifth image is less than 0, repeating the process from step E to step I until the circle center $P_{5k}$ with radius $R_1 \geq R_{threshold\ 2}$ and grayscale value greater than or equal to 0 is found;

L) adding the circle center $P_{5k}$ with $R_1 \geq R_{threshold\ 2}$ and grayscale value greater than or equal to 0 into the point list, generating a new radius list, and adding the radius $R_k$ into the radius list.

17. The method for acquiring centerline of aorta based on CT sequence images according to claim 16, **characterized in that** the manner for filtering the radius $R_k$, and generating a new radius list comprises:

M) if $N_k < N_{threshold\ 2}$, comparing a distance L between the circle center $P_{5k}$ and the end point in the point list with $L_{threshold}$, and if $L > L_{threshold}$, repeating step E to step N until the number of points in the point list $N_k \geq N_{threshold\ 2}$, or $L \leq L_{threshold}$;

N) if $N_k \geq N_{threshold\ 2}$, or $N_k < N_{threshold\ 2}$, $L \leq L_{threshold}$ then replacing the radius value of a point far from the circle center $P_{5k}$ with an average radius value of the remaining points as $R_k$,

filling the radius $R_k$ into the radius list and generating a new radius list.

18. A computer storage medium, **characterized in that**, the method for acquiring centerline of aorta based on CT sequence images according to any one of claims 1 to 17 is implemented when a computer program is executed by a processor.

19. A system for the method for acquiring centerline of aorta based on CT sequence images according to any one of claims 1 to 17, **characterized by** comprising: a CT data acquisition device, a gravity center of heart extraction device, a gravity center of spine extraction device, a filtering device and a centerline of aorta extraction device;

the CT data acquisition device being configured for acquiring three-dimensional data of CT sequence images;

the gravity center of heart extraction device being connected to the CT data acquisition device and for acquiring a gravity center of heart based on the three-dimensional data;

the gravity center of spine extraction device being connected to the CT data acquisition device and configured for acquiring a gravity center of spine based on the three-dimensional data;

the filtering device being connected to the CT data acquisition device, the gravity center of heart extraction device, and the gravity center of spine extraction device, for filtering impurity data from the three-dimensional data of CT sequence images to obtain an image containing left atrium, left ventricle and without interfering coronary artery tree;

the centerline of aorta extraction device comprising a binarized image processing unit, a circle center extraction unit, an radius extraction unit and a centerline of aorta extraction unit, the binarized image processing unit being connected to the circle center extraction unit, the radius extraction unit and the centerline of aorta extraction unit, the centerline of aorta extraction unit being connected to the circle center extraction unit and the radius extraction unit;

the binarized image processing unit being configured for layered slicing the image containing left atrium, left ventricle and without interfering coronary artery tree to obtain a group of binarized images;

the circle center extraction unit being configured for obtaining a circle center from each layer of slice in the group of binarized images, to generate a point list;

the radius extraction unit being configured for obtaining an radius of the corresponding circle based on the circle center, to generate an radius

**EP 4 174 761 A1**

list;
the centerline of aorta extraction unit being configured for mapping one or more pixel points in the point list and the radius list of each layer of slice to the image containing left atrium, left ventricle and without interfering coronary artery tree to obtain a centerline of aorta.

S1000

acquiring three-dimensional data of CT sequence images;

S2000

acquiring a gravity center of heart and a gravity center of spine based on the three-dimensional data;

S3000

filtering impurity data from the three-dimensional data of CT sequence images to obtain an image containing left atrium, left ventricle and without interfering coronary artery tree; layered slicing the image containing left atrium, left ventricle and without interfering coronary artery tree to obtain a group of binarized images; obtaining a circle center and an radius of the corresponding circle from each layer of slice in the group of binarized images, to generate a point list and an radius list respectively; and mapping one or more pixel points in the point list and the radius list of each layer of slice to the image containing left atrium, left ventricle and without interfering coronary artery tree to obtain a centerline of aorta.

FIG.1

S2100

plotting a grayscale histogram of the CT images;

S2200

along a direction of the end point M to the original point O of the grayscale histogram, acquiring a volume of each grayscale value region from point M to point M-1, from point M to point M-2, until from point M to point O;

S2300

acquiring a volume ratio V of the volume of each grayscale value region to a volume of the total region from point M to point O;

S2400

if V = b, picking a start point corresponding to a grayscale value region, projecting the start point onto a CT three-dimensional image, acquiring a three-dimensional image of a heart region, and picking a physical gravity center of the three-dimensional image of the heart region.

FIG.2

S3010 — setting a lung grayscale threshold $Q_{lung}$ based on medical knowledge and CT imaging principle;

S3020 — if a grayscale value in the grayscale histogram being less than $Q_{lung}$, removing an image corresponding to the grayscale value to obtain a first image with the lung tissue removed.

FIG.3

S3030 — projecting the gravity center of heart $P_2$ onto the first image to obtain a circle center of the heart $O_1$;

S3040 — setting a grayscale threshold for the descending aorta $Q_{descending}$, and binarizing the first image;

S3050 — acquiring a circle corresponding to the descending aorta based on a distance from the descending aorta to the circle center of the heart $O_1$ and a distance from the spine to the circle center of the heart $O_1$;

S3060 — removing the descending aorta from the first image to obtain a second image.

FIG.4

S3041

acquiring one or more pixel points PO within the first image with a grayscale value greater than the grayscale threshold for the descending aorta $Q_{descending}$, and calculating an average grayscale value of the one or more pixel points PO;

S3042

layered slicing the first image starting from its bottom layer to obtain a first group of two-dimensional sliced images;

S3043

binarizing the first image, removing impurity points in the first image to obtain a binarized image.

FIG.5

S3051

setting an radius threshold of the circle formed from the descending aorta to an edge of the heart to $r_{threshold}$;

S3052

acquiring an approximate region of the spine and an approximate region of the descending aorta based on the distance between the descending aorta and the heart being less than the distance between the spine and the heart;

S3053

removing one or more error pixel points based on the approximate region of the descending aorta, and obtaining an image of the descending aorta, i.e., a circle corresponding to the descending aorta.

FIG.6

S3061 — if the number of circle centers in the list of seed points is greater than or equal to 3, calculating an average radius $\bar{r}$ and an average circle center point $P_3$ for all seed points;

S3062 — calculating an average $\bar{Q}_1$ of the grayscale values of all pixel points PO within the circle with $P_3$ as the circle center and $\bar{r}$ as the radius, setting a parameter a to obtain a grayscale threshold of a connected domain $Q_{connected} = \bar{Q}_2 - a$;

S3063 — recalculating a center point $P_4$ of the connected domain;

S3064 — calculating the Euclidean distance between $P_3$ and $P_4$ on each layer of two-dimensional slice in turn, starting from the bottom layer;

S3065 — if the Euclidean distance between $P_3$ and $P_4$ on the two-dimensional slice of the b-th layer is greater than m, setting the pixel value corresponding to the pixel point PO of all two-dimensional slices of the b-th layer and its above to 0, to obtain an image corresponding to the first layer to the (b-1)-th layer as a second image;

S3066 — if the Euclidean distance between $P_3$ and $P_4$ on the two-dimensional slice of the b-th layer is less than or equal to m, extracting one or more pixel points with grayscale value greater than 0 within the two-dimensional slice of the b-th layer, and setting the $P_3$ point on the two-dimensional slice of the b-th layer as the $P_4$ point; setting the pixel value corresponding to the pixel point PO of all two-dimensional slices of the (b+1)-th layer and its above to 0, to obtain an image corresponding to the first layer to the b-th layer as a second image.

FIG.7

S3070 — setting a grayscale threshold of spine $Q_{spine}$ based on the gravity center of spine $P_1$ and the gravity center of heart $P_2$;

S3080 — extracting one or more pixel points in the second image corresponding to one or more pixel points PO with a grayscale value greater than $Q_{spine}$;

S3090 — extracting a connected domain of the spine based on the extracted one or more pixel points, and removing the connected domain of the spine to obtain a third image.

FIG.8

S3100 — extracting one or more pixel points in the third image corresponding to one or more pixel points PO with a grayscale value greater than 0 and setting grayscale value of the one or more pixel points corresponding to the second image to 0 to obtain a fourth image;

S3110 — setting a grayscale threshold of ribs $Q_{rib}$, extracting one or more pixel points with grayscale value $Q > Q_{rib}$ from the fourth image, extracting a connected domain of the ribs based on the extracted one or more pixel points, removing the connected domain of the ribs, and obtaining a fifth image with the descending aorta, spine, and ribs removed, where the fifth image is an image containing left atrium, left ventricle and without interfering coronary artery tree.

FIG.9

CT data acquisition device 100

gravity center of heart extraction device 200

gravity center of spine extraction device 300

filtering device 400

centerline of aorta extraction unit 540

radius extraction unit 530

circle center extraction unit 520

binarized image processing unit 510

centerline of aorta extraction device 500

FIG.10

FIG.11

FIG.12

FIG.13

FIG.14

## INTERNATIONAL SEARCH REPORT

| International application No. |
| --- |
| **PCT/CN2020/110230** |

**A.    CLASSIFICATION OF SUBJECT MATTER**

G06T 7/00(2017.01)i;  G06T 7/136(2017.01)i;  G06T 7/187(2017.01)i;  G06T 7/66(2017.01)i;  G06T 5/40(2006.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT; IEEE: 中心线, 主动脉, 冠脉, 心脏, 脊椎, 重心, 切片, 半径, 杂质, 过滤, CT, centerline, aorta, coronary, heart, spine, center, slice, radius, impurity, filter

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108133478 A (SUZHOU RUNXIN MEDICAL INSTRUMENT CO., LTD.) 08 June 2018 (2018-06-08)<br>     description, paragraphs [0040]-[0057] | 1-19 |
| A | CN 110448319 A (BODONG MEDICAL IMAGING TECHNOLOGY (SHANGHAI) CO., LTD.) 15 November 2019 (2019-11-15)<br>     entire document | 1-19 |
| A | US 2009278846 A1 (SIEMENS CORPORATE RESEARCH, INC.) 12 November 2009 (2009-11-12)<br>     entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2021** | **15 March 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/110230**

| Patent document cited in search report | | | Publication date (day/month/year) | Patent family member(s) | | | Publication date (day/month/year) |
|---|---|---|---|---|---|---|---|
| CN | 108133478 | A | 08 June 2018 | None | | | |
| CN | 110448319 | A | 15 November 2019 | None | | | |
| US | 2009278846 | A1 | 12 November 2009 | US | 8073227 | B2 | 06 December 2011 |

Form PCT/ISA/210 (patent family annex) (January 2015)